# DEMANDE DE BREVET EUROPEEN

(11) **EP 1 045 550 A1**
(43) Date de publication de la demande: **18.10.2000**
(21) Numéro de dépôt: 00400962.7
(22) Date de dépôt: 07.04.2000
(51) Int. Cl.: H04L 12/26, H04L 12/24

(54) **Système de supervision de terminaux**

(30) Priorité: 16.04.1999 FR 9904787
(71) Demandeur: SAGEM S.A., 75116 Paris (FR)
(72) Inventeur: Renaut, Pascal, 95420 Magny en Vexin (FR)
(74) Mandataire: Bloch, Gérard

(57) **Abrégé**

Système de supervision d'une pluralité de terminaux (1) comprenant un serveur superviseur (2), relié aux terminaux (1) par un réseau de communication (100), et une pluralité d'équipements superviseurs d'utilisateur (3), chaque équipement (3) étant relié au serveur (2) par un réseau de communication (101-103) et destiné à coopérer avec le serveur (2) afin de superviser au moins une partie des terminaux (1). Le serveur (2) comprend une application d'interface utilisateur de supervision et chaque équipement comprend un navigateur informatique pour mettre en oeuvre ladite application d'interface.

L'invention s'applique à la supervision de répéteurs téléphoniques de réseaux téléphoniques cellulaires.

## Description

L'invention concerne un système de supervision de terminaux, tels que des répéteurs d'un réseau de radiotéléphonie, des feux de circulation ou des horodateurs.

Les répéteurs d'un réseau d'un opérateur de télécommunications donné, pour reprendre cet exemple, sont supervisés par un serveur, propre à l'opérateur, relié aux répéteurs par un réseau de communication, par exemple téléphonique. Le serveur superviseur permet à un utilisateur de consulter des informations relatives aux répéteurs (identité, caractéristiques techniques, état de fonctionnement, indication d'alarme, etc.) et de modifier certaines caractéristiques fonctionnelles des répéteurs (gain, fréquence, etc.).

La mise en place et la maintenance d'un tel serveur exigent un investissement important pour l'opérateur, que la présente invention vise à réduire.

A cet effet, l'invention concerne un système de supervision d'une pluralité de terminaux comprenant des moyens de supervision des terminaux, reliés aux terminaux par un réseau de communication, caractérisé par le fait que les moyens de supervision comprennent un serveur superviseur et une pluralité d'équipements superviseurs d'utilisateur, chaque équipement étant relié au serveur par un réseau de communication et destiné à coopérer avec le serveur afin de superviser au moins une partie des terminaux.

Le système de supervision de l'invention présente une architecture distribuée, partagée par une pluralité d'utilisateurs. Grâce à cela, le coût de la mise en place et de la maintenance du système, et surtout du serveur superviseur est partagé par la pluralité d'utilisateurs et par conséquent réduit pour chacun de ces utilisateurs.

Avantageusement, il est prévu des moyens d'interface utilisateur de supervision permettant à chaque équipement de saisir des requêtes d'utilisateur et de les adresser au serveur, et le serveur comprend des moyens pour exécuter des fonctions de supervision sur une requête d'utilisateur.

Les fonctions de supervision peuvent comprendre au moins l'une des fonctions du groupe comprenant la consultation d'informations relatives à un terminal, l'exécution d'une action sur un terminal et la mise en communication d'un terminal et d'un équipement d'utilisateur.

Finalement, chaque utilisateur peut effectuer une télésurveillance et/ou une télécommande de terminaux, depuis un équipement superviseur. Toutes les fonctions de supervision sont déportées sur le serveur superviseur et peuvent être utilisées par chaque équipement d'utilisateur, par le biais des moyens d'interface utilisateur.

De préférence, le serveur est relié à une base de données contenant des informations relatives à la pluralité de terminaux et des informations relatives à la pluralité d'utilisateurs.

Dans une forme de réalisation particulière, le serveur comprend une application d'interface utilisateur de supervision et chaque équipement comprend un navigateur informatique pour mettre en oeuvre ladite application d'interface.

Chaque équipement d'utilisateur peut ainsi utiliser l'application d'interface utilisateur, disponible auprès du serveur, à l'aide d'un navigateur informatique, par exemple du type permettant de naviguer sur l'Internet.

L'invention sera mieux comprise à l'aide de la description suivante d'une forme de réalisation particulière du système de supervision de l'invention, en référence au dessin annexé sur lequel:

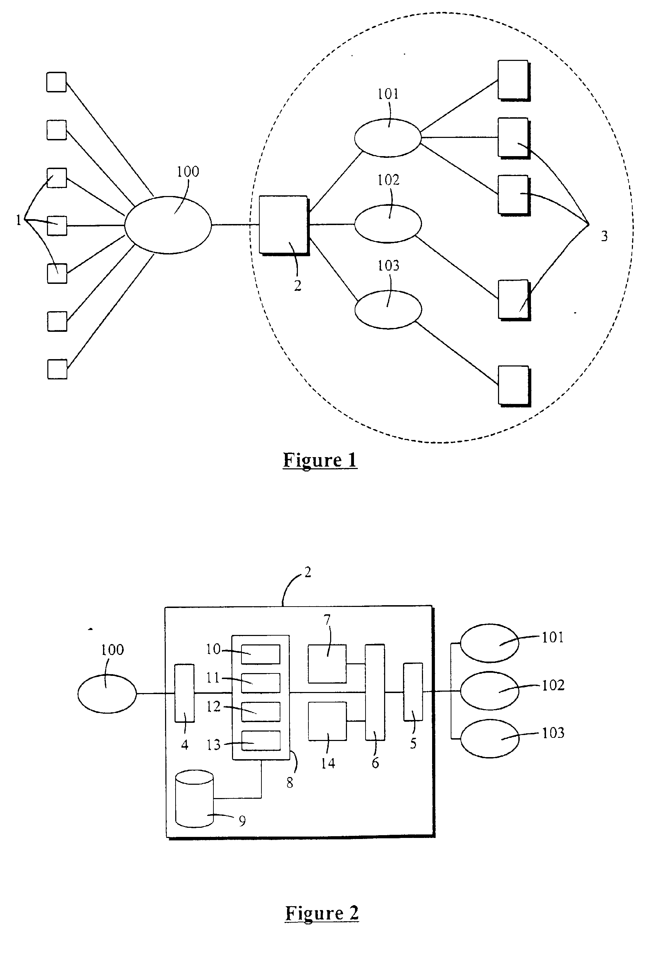

- la figure 1 représente une vue synoptique du système de l'invention;
- la figure 2 représente un schéma bloc fonctionnel d'un serveur superviseur du système de la figure 1 et

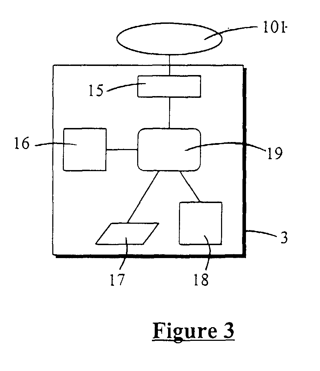

- la figure 3 représente un schéma bloc fonctionnel d'un équipement superviseur d'utilisateur du système de la figure 1.

Le système de supervision de l'invention permet de superviser une pluralité de terminaux 1, en l'espèce des répéteurs téléphoniques de réseaux téléphoniques cellulaires, et comprend un serveur superviseur 2 et une pluralité d'équipements superviseurs d'utilisateur 3.

Les répéteurs 1 sont reliés au serveur 2 par un réseau téléphonique, en l'espèce le réseau téléphonique commuté RTC 100. Les équipements d'utilisateur 3 sont reliés au serveur 2 par une pluralité de réseaux, ici informatiques, comprenant l'Internet 101 et des réseaux locaux de type LAN 102, 103 (Local Area Network - réseau local).

Le serveur superviseur 2 comprend une interface 4 de liaison au réseau téléphonique 100, une interface 5 de liaison à la pluralité de réseaux informatiques 101-103, une interface 6 de communication avec les équipements d'utilisateur 3, un bloc de contrôle d'accès 7, un bloc de supervision 8 et une base de données 9.

L'interface de communication 6 est destinée à gérer les communications entre les équipements d'utilisateur 3 et le serveur 2 et à assurer l'interface entre différents langages informatiques.

Le bloc de contrôle d'accès 7, relié à l'interface de communication 6, est destiné à contrôler la connexion des équipements d'utilisateur 3 au serveur superviseur 2, par vérification de codes d'accès et de mots de passe d'utilisateur.

La base de données 9 comprend, pour chaque répéteur 1, une fiche technique et, pour chaque utilisateur, un profil d'utilisateur.

La fiche technique d'un répéteur 1 contient les informations suivantes, relatives au répéteur 1:
- données d'identification;
- caractéristiques techniques;
- paramètres de fonctionnement (gain, fréquence, etc.);
- état en cours (en fonctionnement ou hors fonctionnement);
- état requis par un utilisateur et
- indication d'alarme et nature de cette alarme, le cas échéant.

Le profil d'un utilisateur contient les informations suivantes:
- données d'identification, en l'espèce un code d'accès et un mot de passe d'utilisateur, et
- données d'identification des répéteurs supervisés par cet utilisateur.

Le bloc de supervision 8, relié à l'interface de communication 6 et à l'interface 4 de liaison au réseau téléphonique 100, comprend une application de supervision comprenant les modules suivants, chacun relatif à une fonction de supervision:
- un module 10 de consultation d'informations dans la base de données 9;
- un module opérationnel 11 d'exécution d'une action sur un répéteur 1;
- un module 12 de mise en communication d'un équipement d'utilisateur 3 et d'un répéteur 1 et
- un module 13 d'acquisition d'alarmes de répéteur 1.

Le module de consultation 10 permet à un équipement d'utilisateur 3 de consulter des informations sur un répéteur 1, stockées dans la base de données 9, sur requête et par téléchargement.

Le module opérationnel 11 est destiné à exécuter différentes actions sur- les répéteurs 1, sur requête d'un équipement d'utilisateur 3. Les actions exécutables consistent notamment à modifier des paramètres de fonctionnement d'un répéteur 1 (gain, fréquence, etc.), à mettre en fonctionnement un répéteur et à arrêter le fonctionnement d'un répéteur 1.

Le module de mise en communication 12 est destiné à mettre en communication un répéteur 1 et un équipement d'utilisateur 3, sur requête de celui-ci.

Le module 13 d'acquisition d'alarmes est destiné à recevoir des appels téléphoniques d'alarme de répéteur 1 et à acquérir, lors de chacun de ces appels, un signal d'alarme, émis par le répéteur appelant 1 et indiquant qu'une alarme est survenue dans ce répéteur 1 ainsi que la nature de cette alarme.

Le serveur 2 comprend en outre un bloc d'interface utilisateur de supervision 14, relié à l'interface de communication 6, comportant une application de gestion d'une interface utilisateur de supervision. Cette interface utilisateur de supervision comprend une page, ici de format HTML, destinée à s'afficher sur l'écran d'un équipement d'utilisateur 3 et comportant une partie de commande et une partie d'affichage. La partie de commande est destinée à contenir des menus de commandes, permettant à un équipement d'utilisateur, par sélection de commandes dans des menus, d'adresser des requêtes au serveur 2. La partie d'affichage est destinée à contenir des informations téléchargées depuis le serveur superviseur 2, par l'équipement d'utilisateur 3. Le bloc 14 est destiné à transmettre la page d'interface utilisateur ainsi que des informations requises, à un équipement d'utilisateur 3, à travers l'un des réseaux informatiques 101-103.

Enfin, le serveur 2 comprend une unité centrale de commande, en l'espèce un microprocesseur, non représentée, à laquelle tous les éléments décrits ci-dessus sont reliés et destinée à commander le fonctionnement du serveur 2 et à en exécuter les applications.

Le serveur 2 a une adresse informatique sur chacun des réseaux informatiques 101-103.

Chaque équipement d'utilisateur 3 comprend une interface 15 de liaison à un réseau informatique (l'Internet 101 ou un réseau LAN 102, 103), une interface homme-machine, un navigateur informatique 16 et une unité centrale de commande 20.

L'interface homme-machine comprend un clavier de saisie 17, un écran d'affichage 18 et un organe 19 de déplacement d'un curseur et de sélection de zones sur l'écran 18.

Le navigateur informatique 16 comprend une application de navigation, ici du type "Netscape Navigator", permettant à l'équipement 3 de se connecter à un serveur informatique, et notamment au serveur superviseur 2, de télécharger des informations depuis ce serveur et de les afficher dans une fenêtre de navigation sur l'écran 18.

L'unité centrale de commande 20, en l'espèce un microprocesseur, reliée au aux éléments 15-18, est destinée à commander le fonctionnement de l'équipement 3 et notamment à mettre en oeuvre, autrement dit à faire fonctionner le navigateur 16.

Le procédé de supervision de terminaux 1 par un équipement superviseur d'utilisateur 3, relié au serveur superviseur 2 par l'un des réseaux informatiques, ici l'Internet 101, correspondant au fonctionnement du système de supervision, va maintenant être explicité.

Un utilisateur lance le navigateur 16, en ouvrant ainsi une fenêtre de navigation qui s'affiche sur l'écran 18. L'utilisateur, à l'aide de l'organe 19 et du clavier 17, saisit l'adresse informatique du serveur superviseur 2, dans un champ d'adresse de la fenêtre de navigation, et commande la connexion de l'équipement 3 au serveur 2, en sélectionnant une commande de connexion dans la fenêtre de navigation. L'équipement 3 se connecte au serveur 2 à travers l'Internet 101, en exécutant un protocole de connexion au cours duquel le serveur 2 vérifie le code d'accès et le mot de passe d'utilisateur, préalablement enregistrés dans l'équipement 3 et transmis par celui-ci au serveur 2, par comparaison avec ceux stockés dans la base de données 9.

Après connexion, le serveur 2 transmet à l'équipement 3 la page d'interface utilisateur de supervision que le navigateur 16 affiche dans la fenêtre de navigation, sur l'écran 18. En sélectionnant des commandes dans les menus, à l'aide du clavier de saisie 17, l'équipement 3 peut adresser au serveur 3 des requêtes d'utilisateur, pour consulter des informations sur un répéteur 1, pour exécuter une action sur un répéteur 1 ou pour communiquer avec un répéteur 1. L'équipement d'utilisateur 3 met ainsi en oeuvre l'application d'interface utilisateur de supervision, par le biais du navigateur 16.

Lorsque le serveur 2 reçoit une requête de consultation d'informations sur un répéteur donné 1, le module de consultation 10 extrait les informations requises de la base de données 9 et les transmet à l'équipement 3, à travers l'Internet 101. Dans l'équipement 3, le navigateur 16 affiche. les informations téléchargées dans la partie d'affichage de l'interface utilisateur de supervision, dans la fenêtre de navigation. L'utilisateur peut ainsi consulter les informations de la fiche technique de chacun des répéteurs qu'il supervise.

Dans le cas où le serveur 2 reçoit une requête pour exécuter une action sur un répéteur donné 1, par exemple pour diminuer le gain du répéteur 1, le module opérationnel 11 établit une communication téléphonique avec le répéteur concerné 1 et lui adresse une commande de diminution de gain. Après réception de cette commande, le répéteur 1 diminue son gain et transmet au serveur 2 un signal d'acquittement indiquant la diminution de gain a été effectuée. Le module opérationnel 11 mémorise alors le nouveau gain du répéteur 1, dans la fiche technique de celui-ci, dans la base de données 9.

Lorsque le serveur 2 reçoit une requête de mise en communication avec un répéteur donné 1, le bloc de mise en communication 12 appelle le répéteur concerné 1, à travers le réseau téléphonique 100, et met en communication le répéteur 1 et l'équipement d'utilisateur 3. Lors de cette communication, l'équipement d'utilisateur peut envoyer des requêtes d'utilisateur au répéteur, par exemple pour prélever directement des caractéristiques de fonctionnement du répéteur 1.

Chaque équipement d'utilisateur 3 est ainsi agencé pour coopérer avec le serveur 2, par le biais de l'interface utilisateur de supervision, afin de superviser les répéteurs 1 de l'utilisateur concerné.

Lorsqu'un dysfonctionnement survient dans un répéteur 1 et génère une alarme, le répéteur 1 appelle le serveur 2, à travers le réseau téléphonique 100, et lui transmet des données d'identification et un signal d'alarme indiquant l'alarme et la nature de celle-ci. Le module 13 d'acquisition d'alarmes reçoit les données d'identification du répéteur 1 et le signal d'alarme, puis mémorise dans la base de données 9, dans la fiche technique du répéteur concerné 1, une indication d'alarme et la nature cette alarme. Le serveur 2 acquiert ainsi l'alarme.

En variante, afin de signaler une alarme, le répéteur 1 pourrait appeler le serveur 2, s'identifier puis interrompre la communication. Ultérieurement, le serveur 2 appellerait le répéteur 1 pour relever la nature de l'alarme.

Les équipements superviseurs d'utilisateur pourraient chacun comprendre une application d'interface utilisateur de supervision pour saisir des requêtes d'utilisateur et les adresser au serveur, de façon à ce que celui-ci mette en oeuvre les fonctions de supervision.

Les répéteurs pourraient être reliés au serveur 2 par une pluralité de réseaux de communication.

Le système de supervision pourrait également permettre de superviser des feux de circulation, des horodateurs et autres terminaux de ce type.

## Revendications

1. Système de supervision d'une pluralité de terminaux (1), comprenant des moyens (2, 3) de supervision des terminaux (1), reliés aux terminaux (1) par un réseau de communication (100), caractérisé par le fait que les moyens de supervision comprennent un serveur superviseur (2) et une pluralité d'équipements superviseurs d'utilisateur (3), chaque équipement (3) étant relié au serveur (2) par un réseau de communication (101-103) et destiné à coopérer avec le serveur (2) afin de superviser au moins une partie des terminaux (1).

2. Système selon la revendication 1, dans lequel il est prévu des moyens d'interface utilisateur de supervision (14) permettant à chaque équipement (3) de saisir des requêtes d'utilisateur et de les adresser au serveur (2), et le serveur (2) comprend des moyens (10-12) pour exécuter des fonctions de supervision sur une requête d'utilisateur.

3. Système selon la revendication 2, dans lequel les fonctions de supervision comprennent au moins l'une des fonctions du groupe comprenant la consultation (10) d'informations relatives à un terminal (1), l'exécution (11) d'une action sur un terminal (1) et la mise en communication (12) d'un équipement d'utilisateur (3) et d'un terminal (1).

4. Système selon l'une des revendications 1 à 3, dans lequel le serveur (2) est relié à une base de données (9) contenant des informations relatives à la pluralité de terminaux (3) et des informations relatives à la pluralité d'utilisateurs.

5. Système selon l'une des revendications 1 à 4, dans lequel le serveur (2) comprend une application d'interface utilisateur de supervision (14) et chaque équipement comprend un navigateur informatique (16) pour mettre en oeuvre ladite application d'interface (14).

6. Système selon l'une des revendications 1 à 5, dans lequel il est prévu, entre le serveur (2) et la pluralité d'équipements (3), des moyens d'interface de communication destinés à assurer l'interface entre différents langages informatiques.

7. Système selon l'une des revendications 1 à 6, dans lequel le serveur comprend des moyens (13) d'acquisition d'alarmes de terminal.
